# EUROPEAN PATENT SPECIFICATION

(11) **EP 3 136 679 B1**
(45) Date of publication and mention of the grant of the patent: **03.01.2018**
(21) Application number: 16178823.7
(22) Date of filing: 11.07.2016
(51) Int. Cl.: H04L 29/06, H04L 12/751, H04L 12/721

(54) **METHOD AND COMMUNICATION SYSTEM**
VERFAHREN UND KOMMUNIKATIONSSYSTEM
PROCÉDÉ ET SYSTÈME DE COMMUNICATION

(30) Priority: 24.08.2015 JP 2015164428
(43) Date of publication of application: 01.03.2017
(73) Proprietor: FUJITSU LIMITED, 211-8588 Kanagawa (JP)
(72) Inventor: Suzuki, Dai, Kanagawa, 211-8588 (JP)
(74) Representative: Hoffmann Eitle

(56) References cited:
- WO-A1-2006/068690
- US-A1- 2002 101 819
- THAMES J L ET AL: "Implementing distributed internet security using a firewall collaboration framework", SOUTHEASTCON, 2007. IEEE, IEEE, PI, 22 March 2007 (2007-03-22), pages 680-685, XP031333901, ISBN: 978-1-4244-1028-6
- PENG, TAO; LECKIE, CHRISTOPHER; RAMAMOHANARAO, KOTAGIRI: "Survey of Network-Based Defense Mechanisms Counteringthe DoS and DDoS Problems", ACM, 2 PENN PLAZA, SUITE 701 - NEW YORK USA, vol. 39, no. 1, 3, April 2007 (2007-04), XP040055460,

## Description

### TECHNICAL FIELD

The present disclosure relates to a method and a communication system.

### BACKGROUND ART

The firewall is known as a technology to avoid attack and unauthorized access from an external network and to protect information processing devices such as a server coupled into a subnetwork such as a local area network (LAN). A communication device which performs the function of the firewall is provided between a network and a LAN, for instance, and receives a packet flowing from the network into the LAN or a packet flowing out from the LAN to the network. The communication device determines whether a packet received by the communication device is allowed to pass through or discarded. The function of the firewall may be achieved by a dedicated device or may be achieved by executing an application program on a general-purpose server or by an Open Flow switch or the like.

For instance, a rule is set and registered in the communication device, the rule stipulating that a packet transmitted from a specific information processing device coupled to the network addressed to another specific information processing device included in the LAN is allowed to pass through. Thus, the communication device allows a packet satisfying the set and registered rule to pass through and can discard other packets. As another example, a rule is set and registered in the communication device, the rule stipulating that a packet transmitted from a specific information processing device in a LAN addressed to another specific information processing device via a network is discarded. Thus, the communication device can discard a packet satisfying the set and registered rule and allows other packets to pass through. A rule set and registered in the communication device may be called a policy or an entry.

Here, in a data communication system in which a first LAN is coupled to a network via a first communication device and a second LAN is coupled to the network via a second communication device, a case is assumed in which a first information processing device in the first LAN transmits a packet addressed to a second information processing device in the second LAN. As a precondition, it is assumed that a rule is not set and registered in the second communication device, the rule stipulating that a packet with a transmission source node of the first information processing device and a destination node of the second information processing device is allowed to pass through. First, a packet transmitted from the first information processing device is received by the first communication device. The first communication device is disposed on the entry side of the network for the packet, and thus is called the entry-side communication device. A packet sent out to the network via the entry-side communication device flows through the network and arrives at the second communication device. The second communication device is disposed on the exit side of the network for the packet, and thus is called the exit-side communication device. Here, the second communication device determines whether the packet is allowed to pass through or discarded in accordance with the rule set and registered in itself. Here, for a packet with a transmission source node of the first information processing device and a destination node of the second information processing device, a rule stipulating that the packet is a passing target is not set and registered in the second communication device, and thus the packet is discarded in the second communication device.

A method is known in which after a packet is transmitted in the network, a packet to be discarded in the second (exit-side) communication device is not discarded in the second communication device but is discarded in the first (entry-side) communication device. For instance, when the second communication device discards a packet which is transmitted from the first information processing device addressed to the second information processing device, the first communication device that manages the communication of the first information processing device is identified based on the topology information on the entire data communication system including the LAN. The second communication device then requests the identified first communication device to discard any packet belonging to the same flow without allowing the packet to pass through. The first communication device updates the rule of itself based on the request from the second communication device. Hereinafter, the first communication device discards any packet which is transmitted from the first information processing device addressed to the second information processing device without transmitting the packet to the network. Consequently, the amount of communication in the network can be suppressed. Related art documents include Japanese Laid-open Patent Publication Nos. 2015-91106 and 2004-159117.

### SUMMARY

### TECHNICAL PROBLEM

In the above-described prior art, in order for the exit-side communication device to request the entry-side communication device to stop allowing a specific packet to pass through, it is desired to identify the entry-side communication device that manages the communication of the first information processing device that has transmitted the packet. In order to identify the entry-side communication device, the topology information on the data communication system is utilized.

It is an object of the present disclosure to provide a method that, when the exit-side communication device discards a packet, is capable of identifying an entry-side communication device of the packet without using the topology information on the data communication system, and of setting a rule in the entry-side communication device.

### SOLUTION TO PROBLEM

The present invention provides a method and communication system as set out in the attached claims.

### ADVANTAGEOUS EFFECTS OF INVENTION

According to the present disclosure, when the exit-side communication device discards a packet, an entry-side communication device of the packet can be identified without using the topology information on the data communication system, and a rule can be set in the entry-side communication device.

### BRIEF DESCRIPTION OF DRAWINGS

FIG. 1 is a diagram illustrating a configuration example of a data communication system in a first embodiment;
FIG. 2 is a diagram illustrating a method of setting a rule in the first embodiment;
FIG. 3 is a diagram illustrating a hardware configuration example of a communication device in the first embodiment;
FIG. 4 is a diagram illustrating a hardware configuration example of a control device in the first embodiment;
FIG. 5 is a functional block diagram of the communication device in the first embodiment;
FIG. 6 is a functional block diagram of the control device in the first embodiment;
FIG. 7 is a table illustrating an example header information of a packet discarded by the communication device in the first embodiment;
FIG. 8 is a table illustrating an example rule which is set and registered in the communication device in the first embodiment;
FIG. 9 is a table illustrating an example header information of a search packet generated by the control device in the first embodiment;
FIG. 10 is a table for explaining identification (ID) of a search packet in the first embodiment;
FIG. 11 is a table illustrating an example rule which is set and registered in the communication device in the first embodiment;
FIG. 12 is a table illustrating an example header information of a notification packet generated by the control device in the first embodiment;
FIG. 13 is a table illustrating an example header information of a rule setting request packet generated by the control device in the first embodiment;
FIG. 14 is a flow chart of processing performed by a processor of the communication device in the first embodiment;
FIG. 15 is a flow chart of processing performed by a processor of the control device in the first embodiment;
FIG. 16 is a flow chart of processing performed by the processor of the control device in the first embodiment;
FIG. 17 is a table illustrating an example rule which is set and registered in the communication device in the first embodiment;
FIG. 18 is a diagram illustrating a configuration example of a data communication system in a second embodiment;
FIG. 19 is a diagram illustrating a method of setting a rule in the second embodiment; and
FIG. 20 is a flow chart of processing performed by a processor of a control device in the second embodiment.

### DESCRIPTION OF EMBODIMENTS

### <First Embodiment>

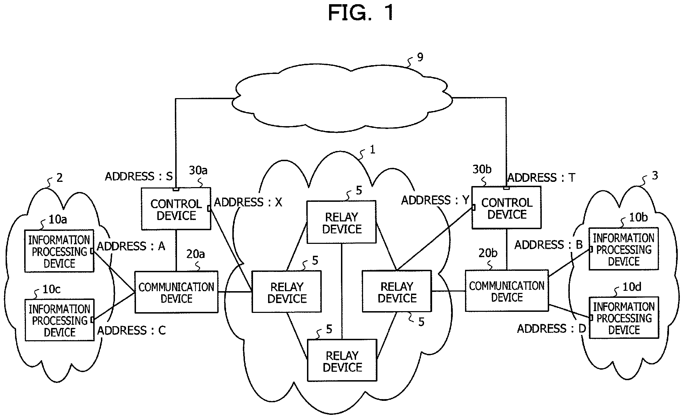

FIG. 1 is a diagram illustrating a configuration example of a data communication system in a first embodiment. A network 1 is a wide area network provided by a telecommunications carrier, for instance. The network 1 includes a plurality of relay devices 5. Each of the relay devices 5 is, for instance, a router or a layer 3 switch. Each of the relay devices 5 performs routing so that a received packet is transmitted to a destination node of the packet.

In FIG. 1, the data communication system includes a communication device 20a and a communication device 20b. The communication device 20a and the communication device 20b are devices having the firewall function. The firewall function may be achieved by a computer executing an application program to achieve the firewall function, or may be achieved by an Open Flow switch and the like. Also, the communication device 20a and the communication device 20b may be achieved by a router. Also, the communication device 20a and the communication device 20b may be achieved by a dedicated computer, or may be achieved by a general-purpose server and the like. A subnetwork 2 is coupled to the network 1 via the communication device 20a. Also, a subnetwork 3 is coupled to the network 1 via the communication device 20b. The subnetwork 2 includes an information processing device that serves as a transmission source node of a packet or a destination node of a packet. In the example illustrated in FIG. 1, an information processing device 10a and an information processing device 10c are included in the subnetwork 2. The subnetwork 2 is an in-house LAN, for instance. Similarly, the subnetwork 3 includes an information processing device. In FIG. 1, the information processing device 10b and the information processing device 10d are included in the subnetwork 3.

The communication device 20a is coupled to a control device 30a. The control device 30a controls the communication device 20a. The control device 30a may be formed of dedicated hardware, or may be achieved by NFV. The control device 30a is, for instance, a firewall controller or an Open Flow controller. The control device 30a controls setting and registration of a rule for the communication device 20a. The rule is a specification that stipulates whether a packet received by the communication device 20a is allowed to pass through or discarded. The communication device 20a allows passing of or discards a received packet based on a set and registered rule. Similarly to the communication device 20a, the communication device 20b is coupled to a control device 30b. The control device 30b controls the communication device 20b. Specifically, the control device 30b controls setting and registration of a rule for the communication device 20b. The communication device 20b allows passing of or discards a received packet based on a set and registered rule. The control device 30a and the control device 30b are each coupled to the network 1, and each generate a packet such as a search packet, a notification packet, a rule setting request packet described later. Also, the control device 30a and the control device 30b can transmit the generated packet to a predetermined destination node via the network 1. Also, the control device 30a and the control device 30b may transmit the above-mentioned packet via another communication path 9 different from the network 1. The communication path 9 may be a communication path physically different from the network 1, or may be achieved by using part of a plurality of networks in which the network 1 is virtually divided by a virtual local area network (VLAN).

As illustrated in FIG. 1, in the first embodiment, let "A" be the address of the information processing device 10a, "B" be the address of the information processing device 10b, "C" be the address of the information processing device 10c, and "D" be the address of the information processing device 10d. In addition, in the first embodiment, let "X" be the address of a transmission and reception port, coupled to the network 1, of the control device 30a, "S" be the address of a transmission and reception port, coupled to the communication path 9, of the control device 30a, "Y" be the address of a transmission and reception port, coupled to the network 1, of the control device 30b, and "T" be the address of a transmission and reception port, coupled to the communication path 9, of the control device 30b. The address is, for instance, an IP address.

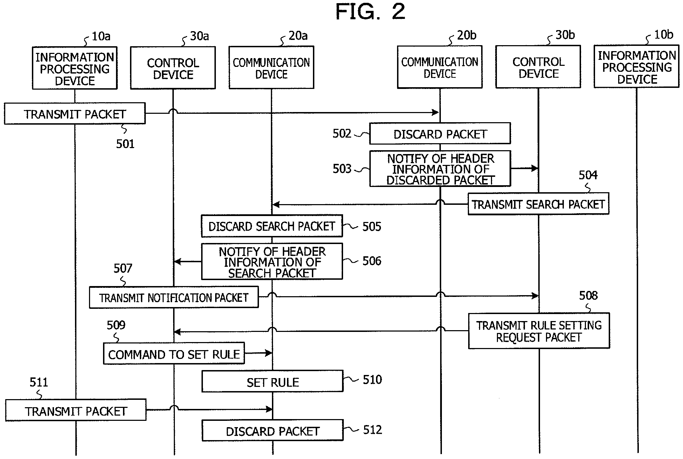

FIG. 2 is a diagram illustrating a method of setting a rule in the first embodiment. FIG. 2 illustrates the flow of processing between the information processing device 10a, the control device 30a, the communication device 20a, the communication device 20b, the control device 30b, and the information processing device 10b. In processing 501, the information processing device 10a transmits a packet addressed to the information processing device 10b. The packet is provided with a header which includes a transmission source address, a destination address and the like of the packet. The packet transmitted by the information processing device 10a is transmitted in the network 1 via the communication device 20a, and arrives at the communication device 20b. Here, the following description is given under the assumption that the packet is discarded based on a rule set and registered in the communication device 20b. In processing 502, the communication device 20b discards the packet. In processing 503, the communication device 20b notifies the control device 30b of the header information of the discarded packet. That is, the communication device 20b notifies the control device 30b of information on the transmission source address, the destination address and the like of the packet discarded by itself.

In processing 504, the control device 30b generates a search packet based on the information notified from the communication device 20b. The search packet is a packet for searching for a communication device 20a between the information processing device 10a as a transmission source node of the discarded packet and the network 1, in other words, a communication device on the entry side. At this point, the control device 30b can identify the information processing device 10a which is the transmission source node of the discarded packet based on the header information notified from the communication device 20b. However, in some cases, the control device 30b does not have information that identifies the communication device 20a which has allowed the packet to pass through in the network 1. For instance, a case where the control device 30b does not have the topology information on the entire data communication system. Thus, the control device 30b generates the above-described search packet. The search packet is a packet that designates the address of a transmission source node of the discarded packet as a destination address. In the first embodiment, a search packet designates the address "A" of the information processing device 10a as a destination address, and is transmitted from the control device 30b. The search packet is transmitted in the network 1, and arrives at the communication device 20a that manages the communication to the information processing device 10a. It is assumed that a rule stipulating that the search packet is discarded is pre-registered in the communication device 20a. In processing 505, the communication device 20a discards the search packet. That is, although the search packet designates the address of the information processing device 10a as the destination node, the search packet has been generated to identify the communication device 20a and is not a packet to be transmitted actually to the information processing device 10a. Therefore, the search packet is discarded by the communication device 20a. In processing 506, the communication device 20a notifies the control device 30a of the header information of the search packet and information that identifies the communication device 20a. The header information of the search packet includes the address information on the control device 30b which is the transmission source node of the search packet.

In processing 507, the control device 30a generates a notification packet based on the information notified from the communication device 20a. The notification packet is a packet for notifying the control device 30b of the information that identifies the communication device 20a, and the notification packet is received by the control device 30b, the control device 30b being a transmission source node of a search packet. In processing 508, with the notification packet, the control device 30b can identify the communication device 20a that has allowed the packet discarded in processing 502 to pass through in the network 1. Thus, in processing 508, the control device 30b generates and transmits a rule setting request packet addressed to the control device 30a. The rule setting request packet includes information that identifies the communication device 20a which is a target device for setting a rule, and information that identifies the content of a rule set in the communication device 20a. The information that identifies the content of a rule is, for instance, information stipulating that a packet with a transmission source address, a destination address, a communication protocol, and a port number respectively matching the transmission source address, destination address, communication protocol, and port number of the packet discarded in processing 502 is to be discarded.

The rule setting request packet is received by the control device 30a. In processing 509, the control device 30a commands the communication device 20a controlled by itself to set a rule. In processing 510, the communication device 20a sets a rule according to the command from the control device 30a. Subsequently, in processing 511, the information processing device 10a transmits a packet. In the case where the transmission source address, destination address, communication protocol, and port number of the packet transmitted in processing 511 respectively match the transmission source address, destination address, communication protocol, and port number of the packet discarded by the communication device 20b in processing 502, the communication device 20a discards the packet in processing 512 in accordance with the rule set and registered in processing 510. Thus, the packet is not discarded when arriving at the exit-side communication device 20b after being transmitted in the network 1, but is discarded by the entry-side communication device 20a of the network 1. Therefore, the amount of communication in the network 1 can be suppressed. Furthermore, according to the first embodiment, even in the case where the control device 30b does not have the topology information on the entire data communication system, it is possible to identify the communication device 20a by generating a search packet.

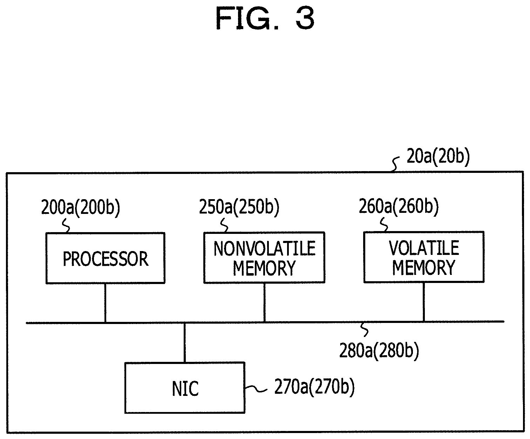

FIG. 3 is a diagram illustrating a hardware configuration example of the communication device 20a and the communication device 20b. Since the communication device 20a and the communication device 20b may be formed of the same or similar hardware, the hardware configuration of the communication device 20a is described here. The communication device 20a includes a processor 200a, a nonvolatile memory 250a, a volatile memory 260a, a network interface card (NIC) 270a, and a bus 280a.

The processor 200a executes a computer program, thereby performing processing such as reception of a packet, determination as to whether a packet is allowed to pass through or discarded, and transmission or discard of a packet. In addition, when a packet is discarded, the processor 200a holds the header information of the discarded packet and notifies the control device 30a of the header information. As the processor 200a, for instance, a central processing unit (CPU), a micro control unit (MCU), a micro processing unit (MPU), a digital signal processor (DSP), a field programmable gate array (FPGA) and the like are applicable.

In the nonvolatile memory 250a, a computer program and the like to be executed by the processor 200a are stored. As the nonvolatile memory 250a, a hard disk drive (HDD), a read only memory (ROM), a mask read only memory (Mask ROM), a programmable read only memory (PROM), a flash memory, a magnetoresistive random access memory (MRAM), a resistance random access memory (ReRAM), a ferroelectric random access memory (FeRAM) and the like are applicable.

A computer program stored in the nonvolatile memory 250a is downloaded to the volatile memory 260a. The computer program downloaded to the volatile memory 260a is executed by the processor 200a. Also, the volatile memory 260a holds data to be processed by the processor 200a or data which has been processed by the processor 200a. As the volatile memory 260a, a dynamic random access memory (DRAM) and a static random access memory (SRAM) are applicable.

The NIC 270a receives a packet transmitted from another node or transmits a received packet to another node. The bus 280a is coupled to the processor 200a, the nonvolatile memory 250a, the volatile memory 260a, and the NIC 270a, and serves as a mutual data communication path between the devices.

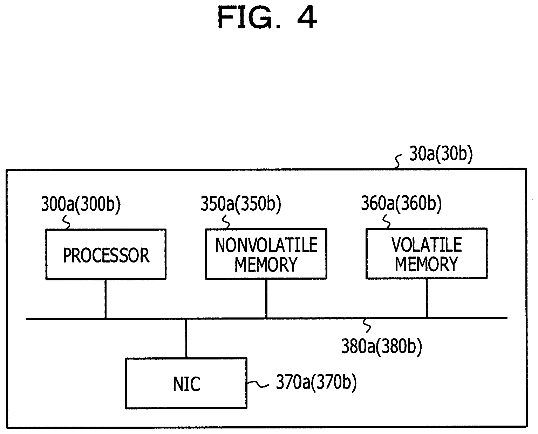

FIG. 4 is a diagram illustrating a hardware configuration example of the control device 30a and the control device 30b. Since the control device 30a and the control device 30b may be formed of the same or similar hardware, the hardware configuration of the control device 30a is described here. The control device 30a includes a processor 300a, a nonvolatile memory 350a, a volatile memory 360a, a NIC 370a, and a bus 380a.

The processor 300a executing a computer program, thereby performing predetermined data processing. For instance, the processor 300a receives the header information of a discarded packet from the communication device 20a, and generates a search packet, a notification packet, and a rule setting request packet. Also, the processor 300a, when receiving a rule setting request packet from the control device 30b, commands the communication device 20a to set a rule. The details of a search packet, a notification packet, and a rule change request packet are described later. As the processor 300a, a CPU, an MCU, an MPU, a DSP, a FPGA and the like are applicable, for instance.

In the nonvolatile memory 350a, a computer program and the like to be executed by the processor 300a are stored. As the nonvolatile memory 350a, a HDD, a ROM, a mask ROM, a PROM, a flash memory, an MRAM, a ReRAM, a FeRAM and the like are applicable.

The computer program stored in the nonvolatile memory 350a is downloaded to the volatile memory 360a. Also, the volatile memory 360a holds data to be processed by the processor 300a or data which has been processed by the processor 300a. As the volatile memory 360a, a DRAM and a SRAM are applicable. The NIC 370a receives a packet transmitted from another node or transmits a received packet to another node. The bus 380a is coupled to the processor 300a, the nonvolatile memory 350a, the volatile memory 360a, and the NIC 370a, and serves as a mutual data communication path between the devices.

Next, the function of the communication device 20a and the communication device 20b and the function of the control device 30a and the control device 30b are disclosed. In the first embodiment, the communication device 20a and the communication device 20b have an equivalent function, and the control device 30a and the control device 30b have an equivalent function. In other words, although FIG. 2 illustrates the processing in the case where the communication device 20a serves as the entry-side communication device, and the communication device 20b serves as the exit-side communication device, conversely there is also a case where the communication device 20b serves as the entry-side communication device, and the communication device 20a serves as the exit-side communication device. For instance, in the case where a packet transmitted from the information processing device 10b to the information processing device 10a is discarded in the communication device 20a, the communication device 20a performs the same processing described in FIG. 2 as the communication device 20b does, and the communication device 20b performs the same processing described in FIG. 2 as the communication device 20a does. In this case, the control device 30a performs the same processing described in FIG. 2 as the control device 30b does, and the control device 30b performs the same processing described in FIG. 2 as the control device 30a does.

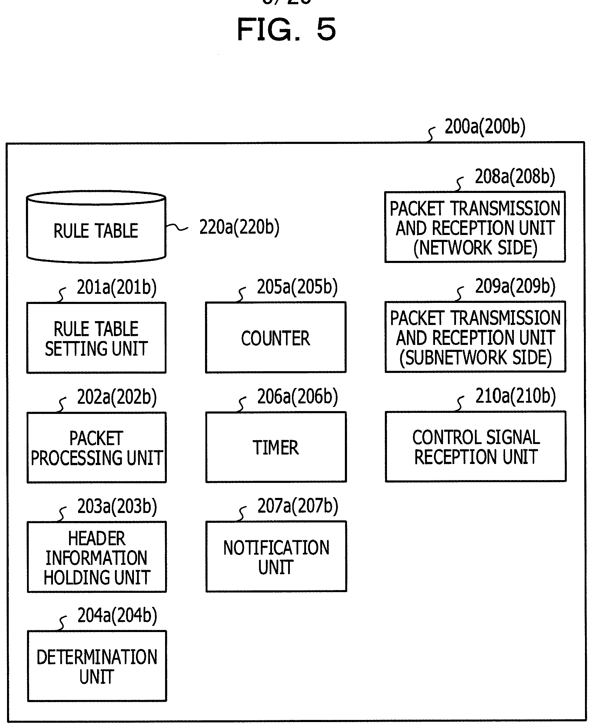

FIG. 5 is a functional block diagram of the processor 200a of the communication device 20a and the processor 200b of the communication device 20b. As described above, since the communication device 20a and the communication device 20b have an equivalent function and the processor 200a and the processor 200b also have an equivalent function, the function of the processor 200a is described here.

The processor 200a downloads a computer program stored in the nonvolatile memory 250a for instance to the volatile memory 260a and executes the computer program, thereby serving as a rule table setting unit 201a, a packet processing unit 202a, a header information holding unit 203a, a determination unit 204a, a counter 205a, a timer 206a, a notification unit 207a, a packet transmission and reception unit 208a, a packet transmission and reception unit 209a, and a control signal reception unit 210a. The processor 200a also has a rule table 220a. The rule table 220a stores a rule for determining whether a received packet is allowed to pass through or discarded. The rule table 220a may be held in the processor 200a, and, for instance, may be held in the nonvolatile memory 250a or the volatile memory 260a.

The rule table setting unit 201a sets a rule in the rule table 220a. In addition to the processing of writing a rule, the processing of setting a rule includes the processing of changing a rule already set and the processing of deleting a rule. The packet processing unit 202a refers to the content of a rule held in the rule table 220a, and thereby allows passing of or discards a received packet. When a packet is discarded by the packet processing unit 202a, the header information holding unit 203a holds the header information of the packet. In the example illustrated in FIG. 2, when a packet is discarded in processing 502 or when a search packet is discarded in processing 505, the header information of each packet is held in header information holding unit 203a.

The determination unit 204a determines whether or not the control device 30a is notified of the header information held in the header information holding unit 203a. When the header information held in the header information holding unit 203a is the header information of a search packet, count-up of the number of discarded packets by 1 by the counter 205a triggers the notification unit 207a to notify the control device 30a of the header information of the search packet. In this case, a notification packet is generated in the control device 30a as described later. On the other hand, when the header information held in the header information holding unit 203a is not the header information of a search packet, but is the header information of the packet discarded in processing 502 of FIG. 2, for instance, the notification unit 207a notifies the control device 30a of the header information based on a notification trigger signal issued by the timer 206a at predetermined time intervals. Also, the number of discarded packets having the same header content is counted by the counter 205a, and the control device 30a is notified of the number along with the header information. In the first embodiment, the packets having the same header content indicate a plurality of packets with respectively matching transmission source address, destination address, communication protocol, and port number. For these packets, the same determination is made in the communication device 20a as to whether each packet is allowed to pass through or discarded. In the present description, the packets having the same header content may be referred to as "packets belonging to the same flow". The technical significance of notifying the control device 30a of the number of discarded packets will be described later.

The packet transmission and reception unit 208a transmits or receives a packet to or from the network 1. The packet transmission and reception unit 209a transmits or receives a packet to or from the subnetwork 2. The control signal reception unit 210a receives a control signal from the control device 30a. The control signal includes, for instance, a rule setting command to command the setting of the content of the rule table 220a.

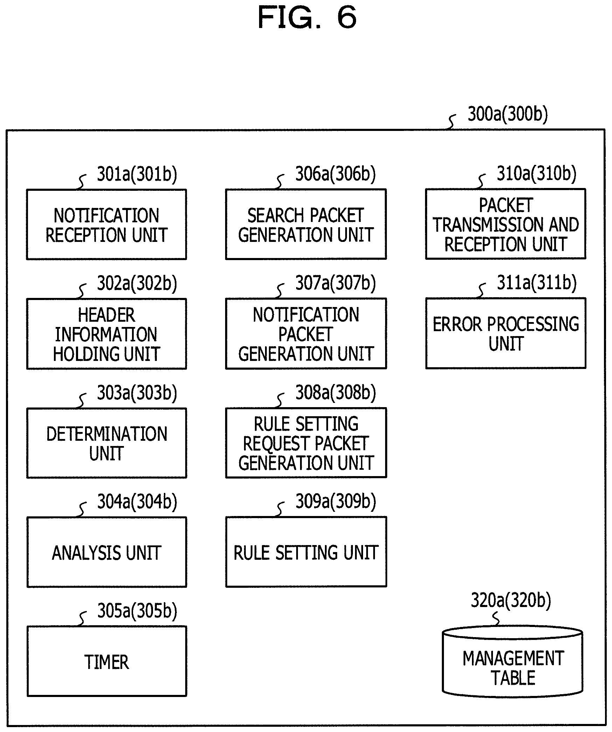

FIG. 6 is a functional block diagram of the processor 300a of the control device 30a and the processor 300b of the control device 30b. As described above, since the control device 30a and the control device 30b have an equivalent function and the processor 300a and the processor 300b also have an equivalent function, the function of the processor 300a is described here. The processor 300a downloads a computer program stored, for instance, in the nonvolatile memory 350a to the volatile memory 360a and executes the computer program, thereby serving as a notification reception unit 301a, a header information holding unit 302a, a determination unit 303a, an analysis unit 304a, a timer 305a, a search packet generation unit 306a, a notification packet generation unit 307a, a rule setting request packet generation unit 308a, a rule setting unit 309a, a packet transmission and reception unit 310a, and an error processing unit 311a. The processor 300a also has a management table 320a.

The notification reception unit 301a receives a notification of header information from the communication device 20a controlled by itself. When the header information is the header information of a packet other than a search packet, the notification reception unit 301a is notified from the communication device 20a of information indicating the number of discarded packets as well along with the header information. The header information holding unit 302a holds the header information and information on the number of discarded packets, received by the notification reception unit 301a. The determination unit 303a determines the type of a packet discarded in the communication device 20a, based on the header information held by the header information holding unit 302a. Specifically, the determination unit 303a determines whether the discarded packet is a search packet or another packet. The method of determining whether or not a discarded packet is a search packet includes, for instance, a method of referring to the port number of header information. As described later, the header information of a search packet is labeled with a port number, for instance, "555" indicating that the packet is a search packet. The determination unit 303a can determine whether or not a discarded packet is a search packet based on the port number of the header information.

When it is determined that the packet discarded in the communication device 20a is not a search packet, the analysis unit 304a conducts analysis to determine whether or not a search packet is generated for the discarded packet. As an example of content to be analyzed, for instance, it is analyzed whether or not a predetermined number or more of packets belonging to the same flow has been discarded within a predetermined time. Measurement of a predetermined time is made by the timer 305a. When it is analyzed that a predetermined number or more of packets belonging to a specific flow has been discarded within a predetermined time, the search packet generation unit 306a generates a search packet. The destination node of the search packet is the transmission source node of the discarded packets, that is, the information processing device 10a in the first embodiment. Also, a packet ID corresponding to the flow is assigned to the search packet. The packet transmission and reception unit 310a transmits a search packet generated by the search packet generation unit 306a, and receives a search packet transmitted from another node.

Here, the technical significance of the above-described analysis is explained. For instance, the information processing device 10b as a target may be attacked using a large number of packets or may be accessed in an unauthorized manner. In this case, a plurality of packets having the same header information is discarded together in a short period of time in the communication device 20b. When a predetermined number or more of packets having the same header information is discarded in the communication device 20a within a predetermined time, the analysis unit 304a determines that the plurality of packets is for the purpose of attacking or making unauthorized access to a specific information processing device. In order to inhibit such a plurality of packets from flowing into the network 1, the search packet generation unit 306a generates a search packet for searching for an information processing device on the entry side of the network 1. In this manner, it is possible to inhibit packets for the purpose of making unauthorized access from flowing into the network 1 and to efficiently reduce the amount of communication in the network 1.

When it is determined that the packet discarded in the communication device 20a is a search packet, the notification packet generation unit 307a generates a notification packet. The notification packet is a packet notifying the transmission source node for a search packet of information that identifies a node which has discarded the search packet, that is, the communication device 20a in the first embodiment. The packet transmission and reception unit 310a transmits the notification packet generated by the notification packet generation unit 307a. Also, the packet transmission and reception unit 310a receives a notification packet transmitted from another node.

The rule setting request packet generation unit 308a, when receiving a notification packet from another node, for instance, the control device 30b, generates a rule setting request packet that requests the communication device 20b identified by the notification packet to set a rule. Also, when the packet transmission and reception unit 310a receives a rule setting request packet from another node, the rule setting unit 309a commands the rule table setting unit 201a to set a rule.

When a search packet is transmitted and a notification packet as a response to the search packet is not received after elapse of a certain time, the error processing unit 311a performs retransmission processing of the search packet as error processing. Similarly, when a notification packet is transmitted and a rule setting request packet as a response to the notification packet is not received after elapse of a certain time, the error processing unit 311a performs retransmission processing of the notification packet as error processing.

In the management table 320a, a packet ID for identifying a search packet and the header information of a discarded packet are registered in association with each other. The packet ID is utilized for confirmation of the correspondence between a search packet and a notification packet.

Next, examples of the content of a rule set and registered in the communication device 20a and the communication device 20b, and the header information of each packet are described with reference to the example illustrated in FIG. 2.

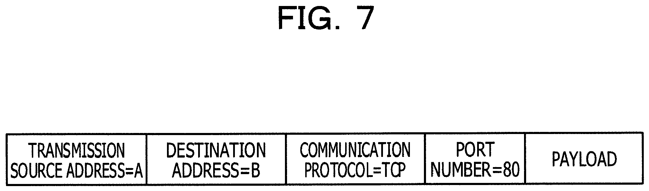

FIG. 7 is a table illustrating an example header information of a packet transmitted from the information processing device 10a addressed to the information processing device 10b in processing 501 illustrated in FIG. 2. In the header of the packet, "A" which is the address of the information processing device 10a is registered as the transmission source address of the packet, and "B" which is the address of the information processing device 10b is registered as the destination address. Also, for instance, "TCP" as a communication protocol and, for instance, "80" as a port number are registered. The port number is a number for identifying a program at a communication destination when an information processing device performs data communication.

Since the destination node of the packet is the information processing device 10b, the packet arrives at the communication device 20b that manages the communication to the information processing device 10b. The communication device 20b determines whether the packet is allowed to pass through or discarded based on the rule set and registered in the rule table 220b.

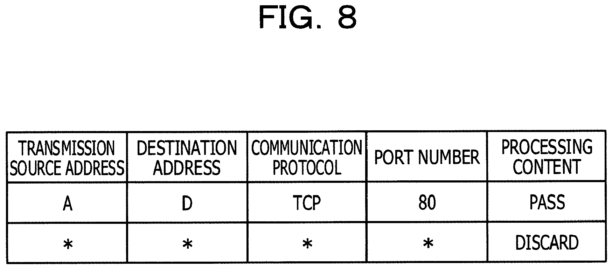

FIG. 8 is a table illustrating an example rule which is held in the rule table 220b. In the rule stipulating whether a received packet is allowed to pass through or discarded, a rule for transmission applied to a packet transmitted from the subnetwork 3 to the network 1, and a rule for reception applied to a packet transmitted from the network 1 to the subnetwork 3 may be individually set. FIG. 8 illustrates an example rule for reception which is set and registered in the rule table 220b. The rule for reception may be set such that only a packet satisfying, for instance, one of the conditions set in the rule table 220b is allowed to pass through, and a packet satisfying none of the conditions set in the rule table 220b is discarded. In the example illustrated in FIG. 8, it is stipulated that a packet having header information with a transmission source address of "A", a destination address of "D", a communication protocol of "TCP", and a port number of "80" is transferred into the subnetwork 3 through the communication device 20b, and other packets (* in FIG. 8) are discarded in the communication device 20b.

The communication device 20b, which has received a packet transmitted from the information processing device 10a in processing 501 of FIG. 2, refers to the rule registered in the rule table 220b. The packet illustrated in FIG. 7 is not registered as a packet that is allowed to pass through the communication device 20b in the rule illustrated in FIG. 8. Therefore, the packet is discarded in the communication device 20b in processing 502 of FIG. 2.

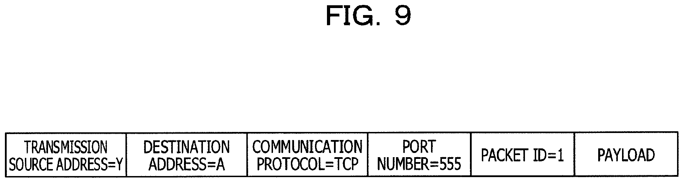

FIG. 9 is a table illustrating an example header information of a search packet which is transmitted from the control device 30b in processing 504 of FIG. 2. In the header of the search packet, the address "Y" of the control device 30b is registered as the transmission source address, and the address "A" of the information processing device 10a, which is the transmission source node of a packet discarded in the communication device 20b, is registered as the destination address. In addition, "TCP" as the communication protocol and "555" as the port number are each registered. Here, in the first embodiment, as an example, it is assumed that an agreement stipulating that a packet with a port number of "555" is a search packet is made between the communication device 20a, the communication device 20b, the control device 30a, and the control device 30b. The header of a search packet includes the packet ID of the search packet. In the example illustrated in FIG. 9, "1" is set as the packet ID.

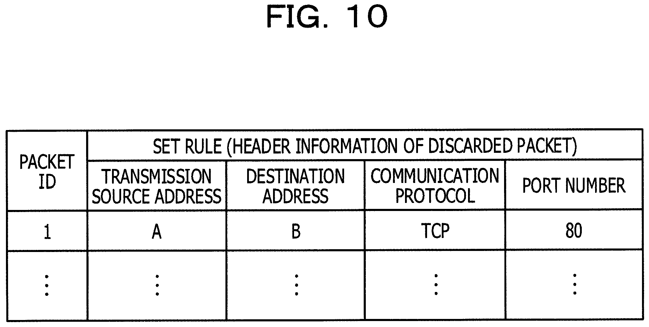

FIG. 10 is a table, held in the management table 320a, illustrating the correspondence between the packet ID of a search packet and the header information of a discarded packet. The packet ID of a search packet is utilized for confirmation of the correspondence between a search packet and a notification packet. The header information of a discarded packet is utilized as the information indicating the content of a rule to be set when a rule setting request packet is generated.

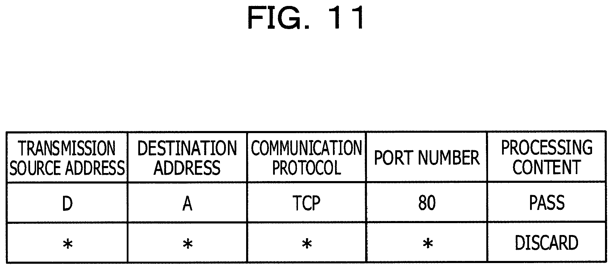

FIG. 11 is a table illustrating an example rule which is held in the communication device 20a that receives a search packet transmitted from the control device 30b in processing 504 of FIG. 2. Similarly to FIG. 8, in the rule stipulating whether a received packet is allowed to pass through or discarded, a rule for transmission applied to a packet transmitted from the subnetwork 2 to the network 1, and a rule for reception applied to a packet transmitted from the network 1 to the subnetwork 2 may be individually set. Here, an example of a rule for reception is illustrated. In the example illustrated in FIG. 11, it is stipulated that a packet having header information with a transmission source address of "D", a destination address of "A", a communication protocol of "TCP", and a port number of "80" is transmitted in the subnetwork 2 through the communication device 20a, and other packets (* in FIG. 11) are discarded in the communication device 20a. In a state where such a rule is set and registered in the rule table 220a, a search packet having the header information illustrated in FIG. 9 is assumed to arrive at the communication device 20a. The header information of the search packet does not match the passing condition for packets illustrated in FIG. 10. Therefore, the search packet is discarded in the

communication device 20a (processing 505 of FIG. 2). However, the control device 30a is notified (processing 506 of FIG. 2) of the header information of the search packet by the notification unit 207a of the communication device 20a, and the header information is held in the header information holding unit 302a. A notification packet is generated by the notification packet generation unit 307a (processing 507 of FIG. 2).

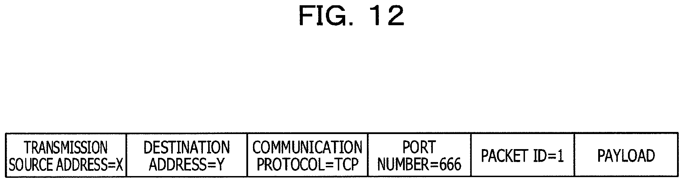

FIG. 12 is a table illustrating an example header information of a notification packet generated by the notification packet generation unit 307a. In the header of the notification packet, the address "X" of the control device 30a is registered as the transmission source address, and the address "Y" of the control device 30b, which is the transmission source node of the search packet, is registered as the destination address. Also, "TCP" as the communications protocol, "666" as the port number are each registered. Here, in the first embodiment, as an example, it is assumed that an agreement stipulating that a packet with a port number of "666" is a notification packet is made between the control device 30a and the control device 30b. In the area of packet ID of the header of a notification packet, the notification packet generation unit 307a writes the same packet ID as the packet ID included in the header of the search packet. Thus, the control device 30b which has received a notification packet can check the notification packet against the search packet. Although not illustrated, the payload portion of a notification packet includes information that identifies the communication device 20a controlled by the control device 30a.

The notification packet arrives at the control device 30b which is the transmission source node of the search packet via the network 1. The control device 30b which has received the notification packet can recognize the communication device 20a which is a search target node, based on the information included in the payload portion of the notification packet. Also, the control device 30b can recognize the address of the control device 30a which manages the communication device 20a, based on the header information of the notification packet. The rule setting request packet generation unit 308b then generates a rule setting request packet, and transmits it to the control device 30a.

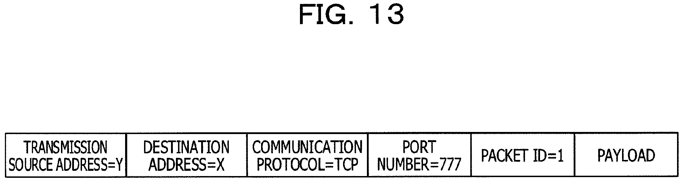

FIG. 13 is a table illustrating an example header information of a rule setting request packet generated in processing 508 of FIG. 2. In the header of the rule setting request packet, the address "Y" of the control device 30b as the transmission source address, the address "X" of the control device 30a as the destination address, "TCP" as the communication protocol, and "777" as the port number are each registered. In the first embodiment, as an example, it is assumed that an agreement stipulating that a packet with a port number of "777" is a rule setting request packet is made between the control device 30a and the control device 30b. Although not illustrated, the payload portion of a rule setting request packet includes information that identifies the communication device 20a as information that identifies a target node for which a rule is set and registered. In addition, the payload portion includes information that identifies the content of a rule to be set and registered. In the example illustrated in FIG. 2, the information stipulates that when a packet having header information with a transmission source address of "A", a destination address of "B", a communication protocol of "TCP", and a port number of "80" is sent out from the subnetwork 2 to the network 1, the packet is discarded.

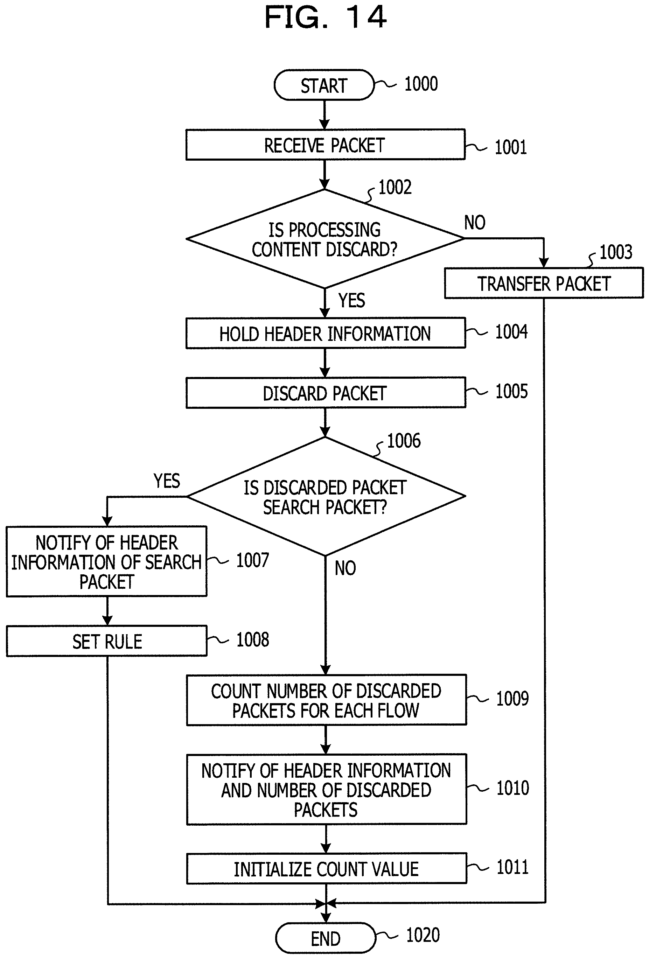

FIG. 14 is a flow chart of processing performed by the processor 200a of the communication device 20a or the processor 200b of the communication device 20b. The processing flow performed by the processor 200a and the processing flow performed by the processor 200b are the same, and herein the processing flow performed by the processor 200a is described. The processing flow chart illustrated in FIG. 14 includes both cases where the communication device 20a is a communication device on the entry side and where the communication device 20a is a communication device on the exit side.

The processing flow starts at processing 1000, and the packet transmission and reception unit 208a or the packet transmission and reception unit 209a receives a packet in processing 1001. In processing 1002, the packet processing unit 202a determines processing for the packet (whether a packet is allowed to pass through or discarded) based on the rule registered in the rule table 220a. When the content of processing for the packet is discarding, the processing flow proceeds to processing 1004, and when the content of processing for the packet is passing through, the processing flow proceeds to processing 1003. When the processing flow proceeds to processing 1003, the packet processing unit 202a transfers the packet to the next node in processing 1003, and the processing flow ends in processing 1020. When the processing flow proceeds to processing 1004, the header information holding unit 203a holds the header information of the packet in processing 1004. Subsequently, the packet processing unit 202a discards the packet in processing 1005. In processing 1006, the determination unit 204a determines whether or not the discarded packet is a search packet. When it is determined that the discarded packet is a search packet, the processing flow proceeds to processing 1007, and when it is determined that the discarded packet is not a search packet, the processing flow proceeds to processing 1009.

When the processing flow proceeds to processing 1007, the notification unit 207a notifies the control device 30a of the header information of the search packet in processing 1007. Subsequently, in processing 1008, the rule table setting unit 201a sets a rule based on a rule setting command from the control device 30a, and the processing flow ends in processing 1020.

On the other hand, when the processing flow proceeds from processing 1006 to processing 1009, the counter 205a counts the number of discarded packets for each flow in processing 1009. In processing 1010, the notification unit 207a notifies the control device 30a of the header information of discarded packets and the number of discarded packets for each flow based on a notification trigger signal issued by the timer 206a. In processing 1011, the counter 205a initializes a count value, and the processing flow ends in processing 1020. Although FIG. 14 illustrates a flow in which the control device 30a is notified of the header information and the like in processing 1010 resulting from reception processing of a packet in processing 1001, the header information and the like held in the header information holding unit 203a may be transmitted to the control device 30a based on a notification trigger signal regardless of the reception processing of a packet.

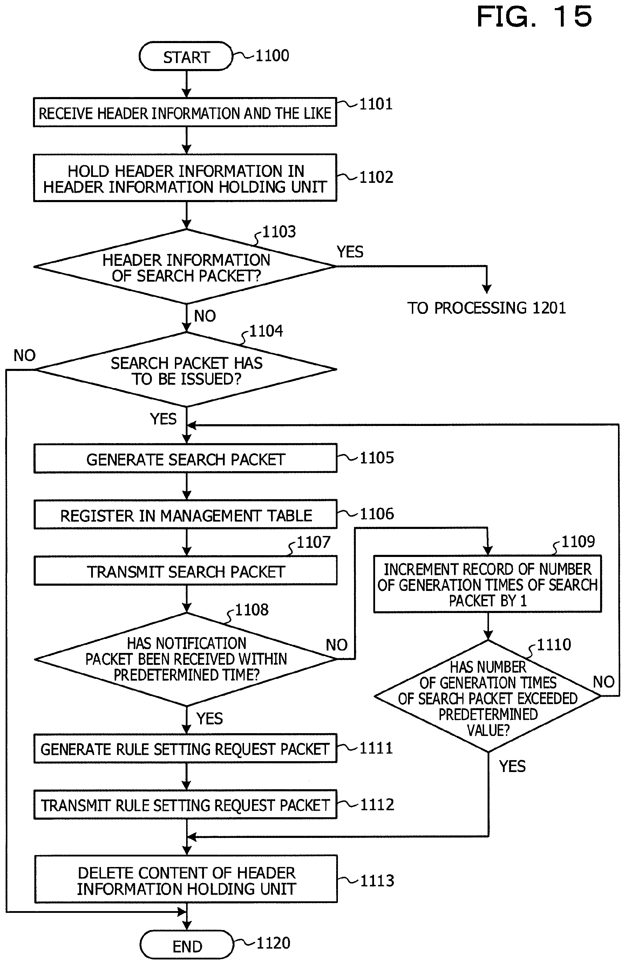

FIG. 15 is a flow chart of processing flow performed by the processor 300a of the control device 30a or the processor 300b of the control device 30b. The processing flow performed by the processor 300a and the processing flow performed by the processor 300b are the same, and herein the processing flow performed by the processor 300a is described. The processing flow chart illustrated in FIG. 15 includes both cases where the control device 30a generates a search packet and where the control device 30a receives a search packet.

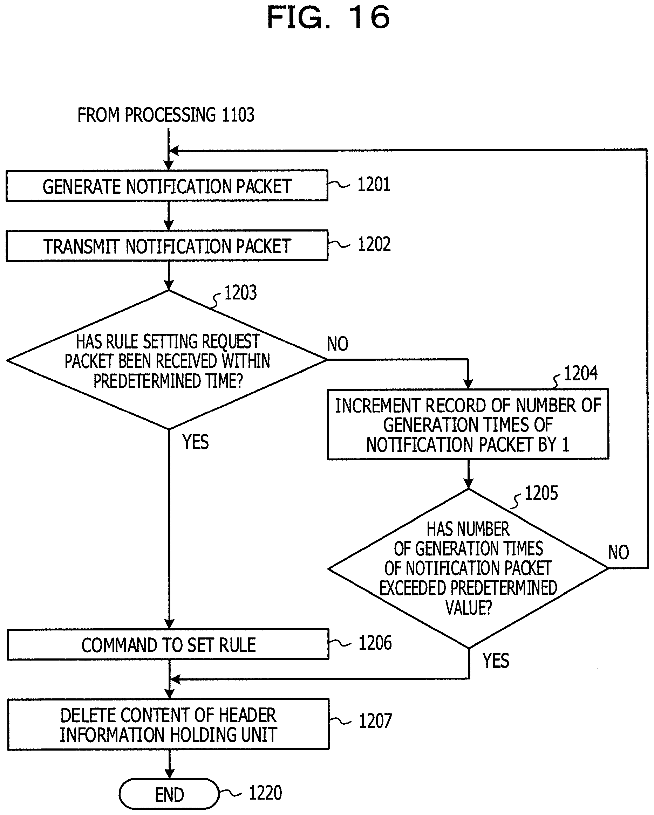

The processing flow starts at processing 1100, and the notification reception unit 301a receives the header information and the like of a discarded packet from the communication device 20a in processing 1101. The information received by the notification reception unit 301a from the communication device 20a may also include information indicating the number of discarded packets in addition to the header information. In processing 1102, the header information holding unit 302a holds the header information and the like received in processing 1101. In processing 1103, the determination unit 303a determines whether or not the header information held in the header information holding unit 302a is the header information of a search packet. When the header information held in the header information holding unit 302a is the header information of a search packet, the processing flow proceeds to processing 1201 (described below) of FIG. 16. When the header information held in the header information holding unit 302a is not the header information of a search packet, the processing flow proceeds to processing 1104.

In processing 1104, the analysis unit 304a conducts analysis to determine whether or not a search packet has to be issued, based on the number of discarded packets and the like. When it is determined that no search packet has to be issued, the processing flow is terminated in processing 1120. When it is determined that a search packet has to be issued, the search packet generation unit 306a generates a search packet in processing 1105. In processing 1106, the search packet generation unit 306a registers the packet ID of the generated search packet and the header information of discarded packets in association with each other in the management table 320a. In processing 1107, the packet transmission and reception unit 310a transmits the generated search packet. Subsequently, in processing 1108, the error processing unit 311a determines whether or not a notification packet has been received by the packet transmission and reception unit 310a within a certain time since the transmission of a search packet. When a notification packet is not received within a predetermined time, in processing 1109, the error processing unit 311a increments a count value to record the number of generation times of a search packet by 1. In processing 1110, the error processing unit 311a determines whether or not the number of generation times of a search packet has exceeded a predetermined value. When it is determined that the number of generation times of a search packet has not exceeded a predetermined value, the processing flow returns to processing 1105 and a search packet is generated again. On the other hand, when it is determined that the number of generation times of a search packet has exceeded a predetermined value, the processing flow proceeds from processing 1110 to processing 1113.

When it is determined that a notification packet has been received within a predetermined time in processing 1108, in processing 1111, the rule setting request packet generation unit 308a generates a rule setting request packet. In processing 1112, the packet transmission and reception unit 310a transmits the generated rule setting request packet. In processing 1113, the header information holding unit 302a deletes the header information held by itself. Subsequently, the processing flow ends in processing 1120.

FIG. 16 is part of flow chart of the processing flow performed by the processor 300a of the control device 30a or the processor 300b of the control device 30b, and is a flow chart of the processing flow following processing 1103 disclosed in FIG. 15. The processing flow performed by the processor 300a and the processing flow performed by the processor 300b are the same, and herein the processing flow performed by the processor 300a is described.

When it is determined in processing 1103 that the header information held in the header information holding unit 302a is the header information of a search packet, in processing 1201, the notification packet generation unit 307a generates a notification packet. In processing 1202, the packet transmission and reception unit 310a transmits the generated notification packet. In processing 1203, the error processing unit 311a determines whether or not a rule setting request packet has been received by the packet transmission and reception unit 310a within a predetermined time after the transmission of the notification packet. When a rule setting request packet has not been received within a predetermined time, the processing flow proceeds to processing 1204, and when a rule setting request packet has been received within a predetermined time, the processing flow proceeds to processing 1206.

In processing 1204, the error processing unit 311a increments a count value to record the number of generation times of a notification packet by 1. In processing 1205, the error processing unit 311a then determines whether or not the number of generation times of a notification packet has exceeded a predetermined value. When it is determined that the number of generation times of a notification packet has not exceeded a predetermined value, the processing flow returns to processing 1201 and a notification packet is generated again. When it is determined that the number of generation times of a notification packet has exceeded a predetermined value, the processing flow proceeds from processing 1205 to processing 1207.

On the other hand, when it is determined in processing 1203 that a rule setting request packet has been received within a predetermined time, in processing 1206, the rule setting unit 309a commands the rule table setting unit 201a of the communication device 20a to set a rule. Subsequently, in processing 1207, the header information holding unit 302a deletes the header information held by itself, and the processing flow ends in processing 1220.

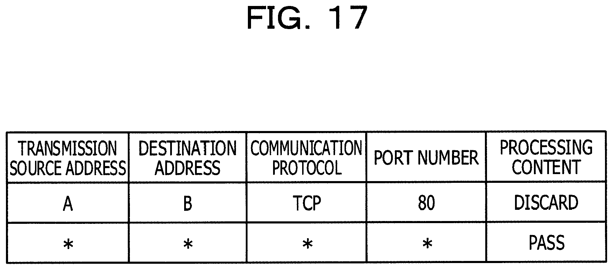

FIG. 17 is a table illustrating an example rule which is held in the rule table 220a. Here, an example of a rule for transmission set in processing 510 of FIG. 2 is disclosed. As illustrated in FIG. 17, a rule is set that stipulates that a packet having header information with a transmission source address of "A", a destination address of "B", a communication protocol of "TCP", and a port number of "80" is discarded in the communication device 20a, and other packets (* in FIG. 17) are allowed to pass through the communication device 20a. Consequently, a packet having the above-described header information is not discarded in the communication device 20b on the exit side of the network 1, but is discarded in the communication device 20a on the entry side of the network 1.

Thus, according to the first embodiment, when a packet is discarded in the communication device 20a or the communication device 20b on the exit side of the network 1, a rule can be set in the communication device 20b or the communication device 20a on the entry side of the network 1. Also, even when the control device 30a or the control device 30b does not have the topology information on the entire data communication system, the communication device 20a or the communication device 20b on the entry side can be identified, and it is possible to set a rule in the communication device 20a or the communication device 20b on the entry side.

In the first embodiment, communication of a notification packet and a rule setting request packet performed between the communication device 20a and the communication device 20b has been described by way of an example which is performed using a packet transmission and reception port, for the network 1, of the communication device 20a, and a packet transmission and reception port, for the network 1, of the communication device 20b. Alternatively, the control device 30a and the control device 30b may perform communication using the packet transmission and reception port labeled with the address "S", for the communication path 9, of the control device 30a, and the packet transmission and reception port labeled with the address "T", for the communication path 9, of the control device 30b. Use of the communication path 9 separated from the network 1 makes it possible to avoid transmission of a notification packet and a rule setting request packet by a node not coupled to the communication path 9, the node impersonating the control device 30a or the control device 30b.

Although the communication device 20a and the control device 30a are illustrated as separate devices in the first embodiment, the embodiments of the present disclosure are not limited to this. For instance, a firewall including the function of the communication device 20a and the function of the control device 30a may be provided between the network 1 and the subnetwork 2. Similarly, the communication device 20b and the control device 30b may not be achieved as separate devices.

The network 1 may not be a wide area network provided by a single telecommunications carrier. The network 1 may include a plurality of different wide area networks provided by different telecommunications carriers. In the case where the communication device 20a and the communication device 20b each belong to different wide area networks and the control device 30a and the control device 30b each belong to different wide area networks, information on the specification of a search packet, a notification packet, and a rule setting request packet is shared between the control device 30a and the control devices 30b. Consequently, even when the network 1 includes a plurality of wide area networks, a rule can be set in the entry-side communication device 20a.

### <Second Embodiment>

In the first embodiment, an example has been described in which the control device 30a and the control device 30b control the communication device 20a and the communication device 20b, respectively. In the second embodiment, an example is disclosed in which the control device 30a controls both the communication device 20a and the communication device 20b.

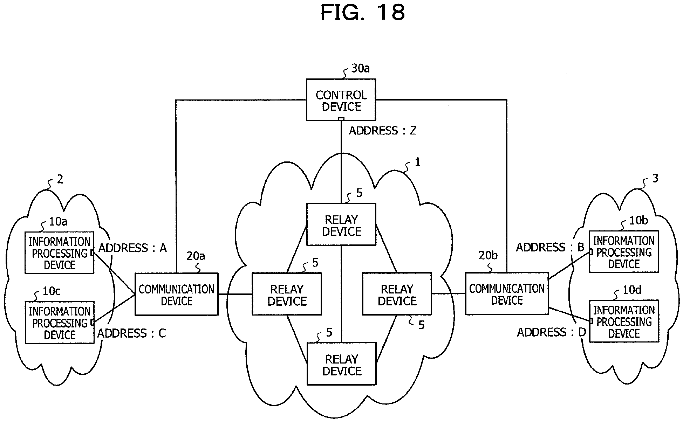

FIG. 18 is a diagram illustrating a configuration example of a data communication system in the second embodiment. The same components as those disclosed in FIG. 1 are labeled with the same symbol, and a description is omitted. Each of the communication device 20a and the communication device 20b is controlled by the control device 30a. The control device 30a is coupled to the network 1 and able to transmit and receive a packet. It is assumed that an address "Z" is assigned to the control device 30a. Similarly to the first embodiment, the control device 30a may be achieved by the hardware configuration illustrated in FIG. 3.

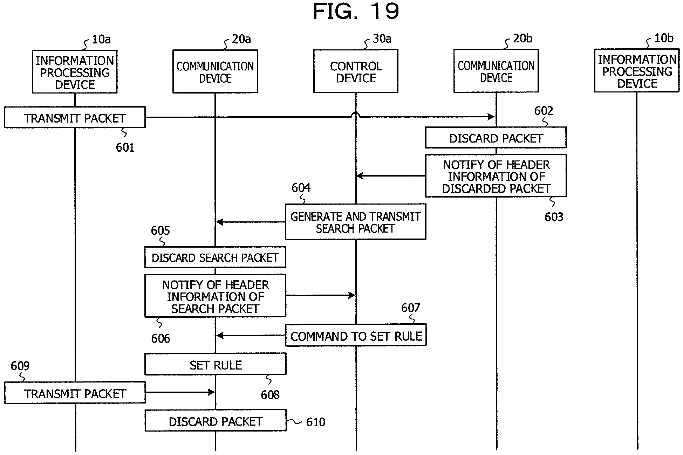

FIG. 19 is a diagram illustrating a processing method for rule setting and registration in the second embodiment. In processing 601, the information processing device 10a transmits a packet addressed to the information processing device 10b. The header information of the packet is assumed to be the same as the header information illustrated in FIG. 7. A packet transmitted from the information processing device 10a passes through the communication device 20a, and arrives at the communication device 20b. It is assumed that the same rule as the rule illustrated in FIG. 8 is set and registered in the communication device 20b. In processing 602, the communication device 20b discards the packet based on a rule set and registered. In processing 603, the communication device 20b notifies the control device 30a of the header information of the discarded packet. In processing 604, the control device 30a generates a search packet. The header information of the search packet is assumed to be the same as the header information of the search packet illustrated in FIG. 9. However, the transmission source address is not "Y" illustrated in FIG. 9 but the address "Z" of the control device 30a in the second embodiment. Registration to the management table 320a illustrated in FIG. 10 is made based on the generation of the search packet.

The search packet is generated with a destination node of the information processing device 10a, and is transmitted from the control device 30a. The search packet is transmitted in the network 1, and arrives at the communication device 20a that manages the communication to the information processing device 10a. It is assumed that the rule for reception illustrated in FIG. 11 is set and registered in the communication device 20a. In processing 605, the communication device 20a discards the search packet based on the above-described rule for reception. In processing 606, the communication device 20a notifies the control device 30a of the header information of the search packet. The header information includes packet ID. At this point, the communication device 20a notifies the control device 30a of information that identifies the communication device 20a. The control device 30a refers to the management table 320a based on the packet ID included in the header information of the packet notified from the communication device 20a, and identifies the header information of a corresponding discarded packet. In processing 607, the control device 30a commands the communication device 20a to set a rule based on the header information of the discarded packet registered in the management table 320a. In processing 608, the communication device 20a sets a rule based on the command from the control device 30a. Subsequently, in processing 609, the information processing device 10a transmits a packet. It is assumed that the packet transmitted here and the packet transmitted in processing 601 belong to the same flow. In this case, the communication device 20a discards the packet in processing 610 in accordance with the rule set and registered in processing 608. Thus, the packet is discarded in the communication device 20a on the entry side of the network 1. Therefore, the amount of communication in the network 1 can be suppressed. Furthermore, even in the case where the control device 30a does not have the topology information on the entire data communication system, it is possible to identify the communication device 20a by generating a search packet. In the second embodiment, both the communication device 20a and the communication device 20b are controlled by the control device 30a, and thus a rule can be set in the communication device 20a without using the notification packet or the rule setting request packet disclosed in the first embodiment.

As the functional block of the processor 200a of the communication device 20a and the processor 200b of the communication device 20b in the second embodiment, the same functional block as the functional block illustrated in FIG. 5 is applicable.

As the functional block of the processor 300a of the control device 30a and the processor 300b of the control device 30b in the second embodiment, the same functional block as the functional block illustrated in FIG. 6 is applicable. However, since a notification packet and a rule setting request packet are not generated in the second embodiment, the notification packet generation unit 307a and the rule setting request packet generation unit 308a of the functional block illustrated in FIG. 6 can be omitted.

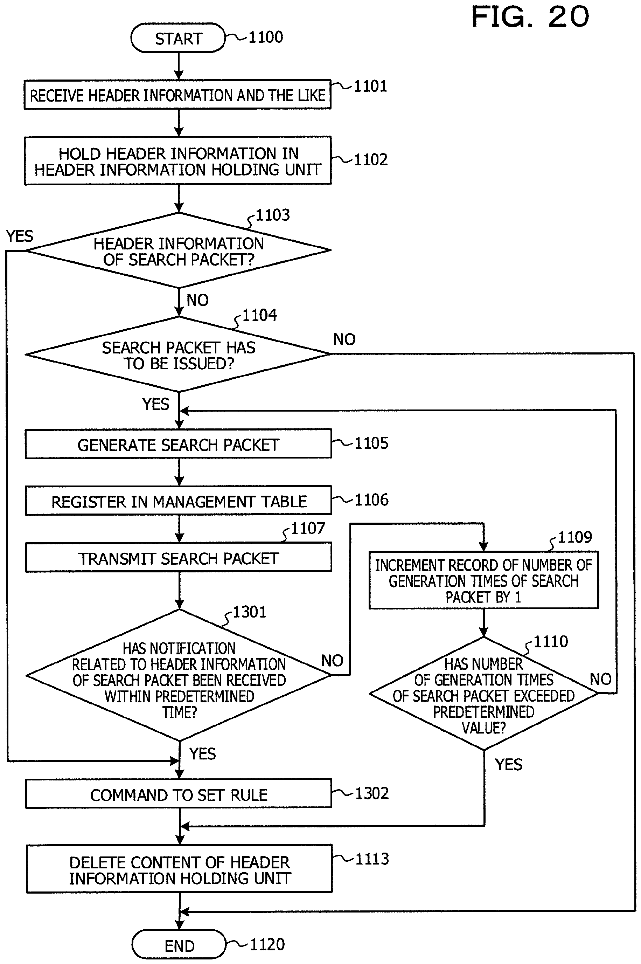

FIG. 20 is a flow chart of processing performed by the processor 300a of the control device 30a in the second embodiment. The same processing as in the flow chart (see FIG. 15) of the processor 300a in the first embodiment is labeled with the same reference symbol, and a description is omitted. In processing 1100 to processing 1107, the same processing as in the first embodiment is performed. In processing 1301, the error processing unit 311a determines whether or not a notification of the header information of a search packet is received from the communication device 20a within a predetermined time since transmission of the search packet. When a notification of the header information of the search packet is not received within a predetermined time, the processing flow proceeds to processing 1109, and when a notification of the header information of the search packet is received within a predetermined time, the processing flow proceeds to processing 1302. In processing 1302, the rule setting unit 309a commands the rule table setting unit 201a of the communication device 20a to set a rule. Subsequently, in processing 1113, the header information holding unit 302a deletes the header information related to the flow in which a rule is set, out of the header information held by itself, and in processing 1120, the processing flow ends. When it is determined in processing 1103 that the header information held in the header information holding unit 302a is the header information of a search packet, the processing flow proceeds to processing 1302, and the rule setting unit 309a commands the rule table setting unit 201a to set a rule.

### REFERENCE SIGNS LIST

1 Network
2, 3 Subnetwork
5 Relay device
9 Communication path
10a, 10b, 10c, 10d Information processing device
20a, 20b Communication device
30a, 30b Control device
200a, 200b, 300a, 300b Processor
250a, 250b, 350a, 350b Nonvolatile memory
260a, 260b, 360a, 360b Volatile memory
270a, 270b, 370a, 370b NIC
280a, 280b, 380a, 380b Bus
201a, 201b Rule table setting unit
202a, 202b Packet processing unit
203a, 203b Header information holding unit
204a, 204b Determination unit
205a, 205b Counter
206a, 206b Timer
207a, 207b Notification unit
208a, 208b Packet transmission and reception unit
209a, 209b Packet transmission and reception unit
210a, 210b Control signal reception unit
220a, 220b Rule table
301a, 301b Notification reception unit
302a, 302b Header information holding unit
303a, 303b Determination unit
304a, 304b Analysis unit
305a, 305b Timer
306a, 306b Search packet generation unit
307a, 307b Notification packet generation unit
308a, 308b Rule setting request packet generation unit
309a, 309b Rule setting unit
310a, 310b Packet transmission and reception unit
311a, 311b Error processing unit
320a, 320b Management table

## Claims

1. A method using a communication system including a first information processing device (10a), a first communication device (20a) configured to relay packet communication between a network (1) and the first information processing device (10a), a second information processing device (10b), a second communication device (20b) configured to relay packet communication between the network (1) and the second information processing device (10b), and a control device (30a) configured to control the first communication device (20a) and the second communication device (20b), the method comprising:
transmitting (601), from the first information processing device (10a) to the network (1) via the first communication device (20a), a first packet which belongs to a first flow, a destination node of the first packet being the second information processing device (10b);
receiving (601), by the second communication device (20b), the first packet;
discarding (602), by the second communication device (20b), the first packet based on a first rule stipulating that a packet belonging to the first flow is to be discarded;
sending (603), by the second communication device (20b), first header information of the first packet to the control device (30a);
identifying, by the control device (30a) based on the first header information, the first information processing device (10a) which is a transmission source node of the first packet;
transmitting (604), by the control device (30a), to the network (1), a second packet of which a destination node is the identified first information processing device (10a);
receiving (604), by the first communication device (20a), the second packet;
based on the receiving of the second packet, setting (607, 608), by the control device (30a), the first rule to the first communication device (20a);
after the setting of the first rule to the first communication device, transmitting (609), from the first information processing device (10a), a third packet which belongs to the first flow;
receiving (609), by the first communication device (20a), the third packet; and
discarding (610), by the first communication device (20a), the third packet based on the first rule.

2. The method according to claim 1, wherein
the control device (30a) includes a first control device configured to control the first communication device (20a) and a second control device configured to control the second communication device (20b).

3. The method according to claim 2, wherein
the identifying of the first information processing device (10a) which is the transmission source node of the first packet and the transmitting (604) of the second packet is performed by the second control device.

4. The method according to claim 2, wherein
the setting (607, 608) the first rule to the first communication device (20a) is performed by the first control device.

5. The method according to claim 2, further comprising:
notifying (603), by the second communication device (20b), the second control device of the first header information after the discarding of the first packet by the second communication device (20b).

6. The method according to claim 5, further comprising:
transmitting, from the first control device to the second control device, a fourth packet including first information identifying that the first information processing device (10a) is a destination node of the second packet, based on second header information of the second packet; and
transmitting, from the second control device to the first control device, based on the first information, a fifth packet requesting the first communication device (20a) to set the first rule.

7. The method according to claim 1, wherein
the first rule stipulates that a packet having the same header information as the first header information is to be discarded.

8. The method according to claim 5, wherein
the first communication device (20a) and the second control device share a second rule stipulating that the second packet is to be discarded, and
the second control device generates the second packet in accordance with the second rule, and the first communication device (20a) discards the second packet based on the second rule.

9. A communication system comprising:
a first information processing device (10a);
a first communication device (20a) configured to relay packet communication between a network (1) and the first information processing device (10a);
a second information processing device (10b);
a second communication device (20b) configured to relay packet communication between the network (1) and the second information processing device (10b); and
a control device (30a) configured to control the first communication device (20a) and the second communication device (20b), wherein
the first information processing device (10a) is configured to transmit (601), to the network (1) via the first communication device (20a), a first packet which belongs to a first flow, a destination node of the first packet being the second information processing device (10b),
the second communication device (20b) is configured to receive (601) the first packet,
the second communication device (20b) is configured to discard (602) the first packet based on a first rule stipulating that a packet belonging to the first flow is to be discarded,
the second communication device (20b) is configured to send (603) first header information of the first packet to the control device (30a),
the control device (30a) is configured to identify, based on the first header information, the first information processing device (10a) which is a transmission source node of the first packet,
the control device (30a) is configured to transmit (604), to the network (1), a second packet of which a destination node is the identified first information processing device (10a),
the first communication device (20a) is configured to receive (604) the second packet,
the control device (30a) is configured to set (607, 608), based on the receiving of the second packet, the first rule to the first communication device (20a),
after the setting of the first rule to the first communication device (20a), the first information processing device (10a) is configured to transmit (609) a third packet which belongs to the first flow,
the first communication device (20a) is configured to receive (609) the third packet, and
the first communication device (20a) is configured to discard (610) the third packet based on the first rule.

10. The communication system according to claim 9, wherein
the control device (30a) includes a first control device and a second control device,
the first control device is configured to control the first communication device (20a), and
the second control device is configured to control the second communication device (20b).

11. The communication system according to claim 10, wherein
the second control device is configured to identify, based on first header information of the discarded first packet, the first information processing device (10a) which is the transmission source node of the first packet,
the second control device is configured to transmit, to the network (1), the second packet of which the destination node is the identified first information processing device (10a), and
the first control device is configured to set, based on the receiving of the second packet, the first rule to the first communication device (20a).

12. The communication system according to claim 11, wherein
the second communication device (20b) is configured to notify the second control device of the first header information after the second communication device (20b) discards the first packet.

13. The communication system according to claim 12, wherein
the first control device is configured to transmit, to the second control device, a fourth packet including first information identifying that the first information processing device (10a) is a destination node of the second packet, based on second header information of the second packet, and
the second control device is configured to transmit, to the first control device, based on the first information, a fifth packet requesting the first communication device (20a) to set the first rule.

14. The communication system according to claim 11, wherein
the first rule stipulates that a packet having the same header information as the first header information is to be discarded.

15. The communication system according to claim 12, wherein
the first communication device (20a) and the second control device share a second rule stipulating that the second packet is to be discarded, and
the second control device is configured to generate the second packet in accordance with the second rule, and the first communication device (20a) is configured to discard the second packet based on the second rule.

## Patentansprüche

1. Verfahren, das ein Kommunikationssystem verwendet, das eine erste Informationsverarbeitungsvorrichtung (10a), eine erste Kommunikationsvorrichtung (20a), die konfiguriert ist, Paketkommunikation zwischen einem Netzwerk (1) und der ersten Informationsverarbeitungsvorrichtung (10a) zu übertragen, eine zweite Informationsverarbeitungsvorrichtung (10b), eine zweite Kommunikationsvorrichtung (20b), die konfiguriert ist, Paketkommunikation zwischen einem Netzwerk (1) und der zweiten Informationsverarbeitungsvorrichtung (10b) zu übertragen, und eine Steuervorrichtung (30a), die konfiguriert ist, die erste Kommunikationsvorrichtung (20a) und die zweite Kommunikationsvorrichtung (20b) zu steuern, aufweist, wobei das Verfahren umfasst:
Übermitteln (601) eines ersten Pakets, das zu einem ersten Fluss gehört, von der ersten Informationsverarbeitungsvorrichtung (10a) an das Netzwerk (1) über die erste Kommunikationsvorrichtung (20a), wobei ein Zielknoten des ersten Pakets die zweite Informationsverarbeitungsvorrichtung (10b) ist;
Empfangen (601) des ersten Pakets durch die zweite Kommunikationsvorrichtung (20b);
Entsorgen (602) des ersten Pakets durch die zweite Kommunikationsvorrichtung (20b) auf Basis einer ersten Regel, die besagt, dass ein Paket, das zu dem ersten Fluss gehört, zu entsorgen ist;
Senden (603) erster Kopfinformationen des ersten Pakets an die Steuervorrichtung (30a) durch die zweite Kommunikationsvorrichtung (20b);
Identifizieren der ersten Informationsverarbeitungsvorrichtung (10a), die ein Übermittlungsquellknoten des ersten Pakets ist, durch die Steuervorrichtung (30a) auf Basis der ersten Kopfinformationen;
Übermitteln (604) eines zweiten Pakets, von dem ein Zielknoten die identifizierte erste Informationsverarbeitungsvorrichtung (10a) ist, an das Netzwerk (1) durch die Steuervorrichtung (30a);
Empfangen (604) des zweiten Pakets durch die erste Kommunikationsvorrichtung (20a);
Einstellen (607, 608) der ersten Regel auf die erste Kommunikationsvorrichtung (20a) durch die Steuervorrichtung (30a) auf Basis des Empfangs des zweiten Pakets;
Übermitteln (609) eines dritten Pakets, das zu dem ersten Fluss gehört, von der ersten Informationsverarbeitungsvorrichtung (10a) nach dem Einstellen der ersten Regel auf die erste Kommunikationsvorrichtung;
Empfangen (609) des dritten Pakets durch die erste Kommunikationsvorrichtung (20a); und
Entsorgen (610) des dritten Pakets durch die erste Kommunikationsvorrichtung (20a) auf Basis der ersten Regel.

2. Verfahren nach Anspruch 1, wobei
die Steuervorrichtung (30a) eine erste Steuervorrichtung, die konfiguriert ist, die erste Kommunikationsvorrichtung (20a) zu steuern, und eine zweite Steuervorrichtung, die konfiguriert ist, die zweite Kommunikationsvorrichtung (20b) zu steuern, aufweist.

3. Verfahren nach Anspruch 2, wobei
das Identifizieren der ersten Informationsverarbeitungsvorrichtung (10a), die der Übermittlungsquellknoten des ersten Pakets ist, und das Übermitteln (604) des zweiten Pakets durch die zweite Steuervorrichtung durchgeführt werden.

4. Verfahren nach Anspruch 2, wobei
das Einstellen (607, 608) der ersten Regel auf die erste Kommunikationsvorrichtung (20a) durch die erste Steuervorrichtung durchgeführt wird.

5. Verfahren nach Anspruch 2, weiter umfassend:
Benachrichtigen (603) der zweiten Steuervorrichtung über die ersten Kopfinformationen durch die zweite Kommunikationsvorrichtung (20b) nach dem Entsorgen des ersten Pakets durch die zweite Kommunikationsvorrichtung (20b).

6. Verfahren nach Anspruch 5, weiter umfassend:
Übermitteln eines vierten Pakets, das erste Informationen aufweist, die auf Basis zweiter Kopfinformationen des zweiten Pakets identifizieren, dass die erste Informationsverarbeitungsvorrichtung (10a) ein Zielknoten des zweiten Pakets ist, von der ersten Steuervorrichtung an die zweite Steuervorrichtung; und
Übermitteln eines fünften Pakets, das anfordert, dass die erste Kommunikationsvorrichtung (20a) die erste Regel einstellt, von der zweiten Steuervorrichtung an die erste Steuervorrichtung auf Basis der ersten Informationen.

7. Verfahren nach Anspruch 1, wobei
die erste Regel besagt, dass ein Paket mit den gleichen Kopfinformationen wie die ersten Kopfinformationen zu entsorgen ist.

8. Verfahren nach Anspruch 5, wobei
die erste Kommunikationsvorrichtung (20a) und die zweite Steuervorrichtung sich eine zweite Regel teilen, die besagt, dass das zweite Paket zu entsorgen ist, und
die zweite Steuervorrichtung das zweite Paket gemäß der zweiten Regel erzeugt und die erste Kommunikationsvorrichtung (20a) das zweite Paket auf Basis der zweiten Regel entsorgt.

9. Kommunikationssystem, umfassend:
eine erste Informationsverarbeitungsvorrichtung (10a);
eine erste Kommunikationsvorrichtung (20a), die konfiguriert ist, Paketkommunikation zwischen einem Netzwerk (1) und der ersten Informationsverarbeitungsvorrichtung (10a) zu übertragen;
eine zweite Informationsverarbeitungsvorrichtung (10b);
eine zweite Kommunikationsvorrichtung (20b), die konfiguriert ist, Paketkommunikation zwischen einem Netzwerk (1) und der zweiten Informationsverarbeitungsvorrichtung (10b) zu übertragen; und
eine Steuervorrichtung (30a), die konfiguriert ist, die erste Kommunikationsvorrichtung (20a) und die zweite Kommunikationsvorrichtung (20b) zu steuern, wobei
die erste Informationsverarbeitungsvorrichtung (10a) konfiguriert ist, ein erstes Paket, das zu einem ersten Fluss gehört, von der ersten Informationsverarbeitungsvorrichtung (10a) an das Netzwerk (1) über die erste Kommunikationsvorrichtung (20a) zu übermitteln (601), wobei ein Zielknoten des ersten Pakets die zweite Informationsverarbeitungsvorrichtung (10b) ist,
die zweite Kommunikationsvorrichtung (20b) konfiguriert ist, das erste Paket zu empfangen (601),
die zweite Kommunikationsvorrichtung (20b) konfiguriert ist, das erste Paket auf Basis einer ersten Regel zu entsorgen (602), die besagt, dass ein Paket, das zu dem ersten Fluss gehört, zu entsorgen ist,
die zweite Kommunikationsvorrichtung (20b) konfiguriert ist, erste Kopfinformationen über das erste Paket an die Steuervorrichtung (30a) zu senden (603),
die Steuervorrichtung (30a) konfiguriert ist, die erste Informationsverarbeitungsvorrichtung (10a), die ein Übermittlungsquellknoten des ersten Pakets ist, auf Basis der ersten Kopfinformationen zu identifizieren,
die Steuervorrichtung (30a) konfiguriert ist, ein zweites Paket, von dem ein Zielknoten die identifizierte erste Informationsverarbeitungsvorrichtung (10a) ist, an das Netzwerk (1) zu übermitteln (604),
die erste Kommunikationsvorrichtung (20a) konfiguriert ist, das zweite Paket zu empfangen (604),
die Steuervorrichtung (30a) konfiguriert ist, auf Basis des Empfangs des zweiten Pakets die erste Regel auf die erste Kommunikationsvorrichtung (20a) einzustellen (607, 608),
die erste Informationsverarbeitungsvorrichtung (10a) konfiguriert ist, nach dem Einstellen der ersten Regel auf die erste Kommunikationsvorrichtung (20a) ein drittes Paket zu übermitteln (609), das zu dem ersten Fluss gehört,
die erste Kommunikationsvorrichtung (20a) konfiguriert ist, das dritte Paket zu empfangen (609), und
die erste Kommunikationsvorrichtung (20a) konfiguriert ist, das dritte Paket auf Basis der ersten Regel zu entsorgen (610).

10. Kommunikationssystem nach Anspruch 9, wobei
die Steuervorrichtung (30a) eine erste Steuervorrichtung und eine zweite Steuervorrichtung aufweist,
wobei die erste Steuervorrichtung konfiguriert ist, die erste Kommunikationsvorrichtung (20a) zu steuern, und
die zweite Steuervorrichtung konfiguriert ist, die zweite Kommunikationsvorrichtung (20b) zu steuern.

11. Kommunikationssystem nach Anspruch 10, wobei
die zweite Steuervorrichtung konfiguriert ist, die erste Informationsverarbeitungsvorrichtung (10a), die der Übermittlungsquellknoten des ersten Pakets ist, auf Basis erster Kopfinformationen des entsorgten ersten Pakets zu identifizieren,
die zweite Steuervorrichtung konfiguriert ist, das zweite Paket, von dem der Zielknoten die identifizierte erste Informationsverarbeitungsvorrichtung (10a) ist, an das Netzwerk (1) zu übermitteln, und
die erste Steuervorrichtung konfiguriert ist, auf Basis des Empfangs des zweiten Pakets die erste Regel auf die erste Kommunikationsvorrichtung (20a) einzustellen.

12. Kommunikationssystem nach Anspruch 11, wobei
die zweite Kommunikationsvorrichtung (20b) konfiguriert ist, die zweite Steuervorrichtung über die ersten Kopfinformationen zu benachrichtigen, nachdem die zweite Kommunikationsvorrichtung (20b) das erste Paket entsorgt hat.

13. Kommunikationssystem nach Anspruch 12, wobei
die erste Steuervorrichtung konfiguriert ist, an die zweite Steuervorrichtung ein viertes Paket zu übermitteln, das erste Informationen aufweist, die auf Basis zweiter Kopfinformationen des zweiten Pakets identifizieren, dass die erste Informationsverarbeitungsvorrichtung (10a) ein Zielknoten des zweiten Pakets ist, und
die zweite Steuervorrichtung konfiguriert ist, an die erste Steuervorrichtung auf Basis der ersten Informationen ein fünftes Paket zu übermitteln, das anfordert, dass die erste Kommunikationsvorrichtung (20a) die erste Regel einstellt.

14. Kommunikationssystem nach Anspruch 11, wobei
die erste Regel besagt, dass ein Paket mit den gleichen Kopfinformationen wie die ersten Kopfinformationen zu entsorgen ist.

15. Kommunikationssystem nach Anspruch 12, wobei
die erste Kommunikationsvorrichtung (20a) und die zweite Steuervorrichtung sich eine zweite Regel teilen, die besagt, dass das zweite Paket zu entsorgen ist, und
die zweite Steuervorrichtung konfiguriert ist, das zweite Paket gemäß der zweiten Regel zu erzeugen, und die erste Kommunikationsvorrichtung (20a) konfiguriert ist, das zweite Paket auf Basis der zweiten Regel zu entsorgen.

## Revendications

1. Procédé utilisant un système de communication incluant un premier dispositif de traitement d'informations (10a), un premier dispositif de communication (20a) configuré pour relayer une communication de paquets entre un réseau (1) et le premier dispositif de traitement d'informations (10a), un second dispositif de traitement d'informations (10b), un second dispositif de communication (20b) configuré pour relayer une communication de paquets entre le réseau (1) et le second dispositif de traitement d'informations (10b), et un dispositif de commande (30a) configuré pour commander le premier dispositif de communication (20a) et le second dispositif de communication (20b), le procédé comprenant :
la transmission (601), du premier dispositif de traitement d'informations (10a) au réseau (1) via le premier dispositif de communication (20a), d'un premier paquet qui appartient à un premier flux, un noeud de destination du premier paquet étant le second dispositif de traitement d'informations (10b) ;
la réception (601), par le second dispositif de communication (20b), du premier paquet;
le rejet (602), par le second dispositif de communication (20b), du premier paquet sur la base d'une première règle stipulant qu'un paquet appartenant au premier flux doit être rejeté ;
l'envoi (603), par le second dispositif de communication (20b), de premières informations d'en-tête du premier paquet au dispositif de commande (30a) ;
l'identification, par le dispositif de commande (30a) sur la base des premières informations d'en-tête, du premier dispositif de traitement d'informations (10a) qui est un noeud source de transmission du premier paquet;
la transmission (604), par le dispositif de commande (30a), au réseau (1) d'un deuxième paquet dont un noeud de destination est le premier dispositif de traitement d'informations identifié (10a) ;
la réception (604), par le premier dispositif de communication (20a), du deuxième paquet;
sur la base de la réception du deuxième paquet, l'application (607, 608), par le dispositif de commande (30a), de la première règle au premier dispositif de communication (20a) ;
après l'application de la première règle au premier dispositif de communication, la transmission (609), depuis le premier dispositif de traitement d'informations (10a), d'un troisième paquet qui appartient au premier flux ;
la réception (609), par le premier dispositif de communication (20a), du troisième paquet;et
le rejet (610), par le premier dispositif de communication (20a), du troisième paquet sur la base de la première règle.

2. Procédé selon la revendication 1, dans lequel :
le dispositif de commande (30a) inclut un premier dispositif de commande configuré pour commander le premier dispositif de communication (20a) et un second dispositif de commande configuré pour commander le second dispositif de communication (20b).

3. Procédé selon la revendication 2, dans lequel :
l'identification du premier dispositif de traitement d'informations (10a) qui est le noeud source de transmission du premier paquet et la transmission (604) du deuxième paquet sont réalisées par le second dispositif de commande.

4. Procédé selon la revendication 2, dans lequel :
l'application (607, 608) de la première règle au premier dispositif de communication (20a) est réalisée par le premier dispositif de commande.

5. Procédé selon la revendication 2, comprenant en outre :
la notification (603), par le second dispositif de communication (20b) au second dispositif de commande, des premières informations d'en-tête après le rejet du premier paquet par le second dispositif de communication (20b).

6. Procédé selon la revendication 5, comprenant en outre :
la transmission, du premier dispositif de commande au second dispositif de commande, d'un quatrième paquet incluant des premières informations identifiant que le premier dispositif de traitement d'informations (10a) est un noeud de destination du deuxième paquet, sur la base de secondes informations d'en-tête du deuxième paquet; et
la transmission, du second dispositif de commande au premier dispositif de commande, sur la base des premières informations, d'un cinquième paquet demandant au premier dispositif de communication (20a) d'appliquer la première règle.

7. Procédé selon la revendication 1, dans lequel :
la première règle stipule qu'un paquet ayant les mêmes informations d'en-tête que les premières informations d'en-tête doit être rejeté.

8. Procédé selon la revendication 5, dans lequel :
le premier dispositif de communication (20a) et le second dispositif de commande partagent une seconde règle stipulant que le deuxième paquet doit être rejeté, et
le second dispositif de commande génère le deuxième paquet selon la seconde règle et le premier dispositif de communication (20a) rejette le deuxième paquet sur la base de la seconde règle.

9. Système de communication comprenant :
un premier dispositif de traitement d'informations (10a) ;
un premier dispositif de communication (20a) configuré pour relayer une communication de paquets entre un réseau (1) et le premier dispositif de traitement d'informations (10a) ;
un second dispositif de traitement d'informations (10b) ;
un second dispositif de communication (20b) configuré pour relayer une communication de paquets entre le réseau (1) et le second dispositif de traitement d'informations (10b) ; et
un dispositif de commande (30a) configuré pour commander le premier dispositif de communication (20a) et le second dispositif de communication (20b), dans lequel :
le premier dispositif de traitement d'informations (10a) est configuré pour transmettre (601) au réseau (1), via le premier dispositif de communication (20a), un premier paquet qui appartient à un premier flux, un noeud de destination du premier paquet étant le second dispositif de traitement d'informations (10b),
le second dispositif de communication (20b) est configuré pour recevoir (601) le premier paquet,
le second dispositif de communication (20b) est configuré pour rejeter (602) le premier paquet sur la base d'une première règle stipulant qu'un paquet appartenant au premier flux doit être rejeté,
le second dispositif de communication (20b) est configuré pour envoyer (603) des premières informations d'en-tête du premier paquet au dispositif de commande (30a),
le dispositif de commande (30a) est configuré pour identifier, sur la base des premières informations d'en-tête, le premier dispositif de traitement d'informations (10a) qui est un noeud source de transmission du premier paquet,
le dispositif de commande (30a) est configuré pour transmettre (604) au réseau (1) un deuxième paquet dont un noeud de destination est le premier dispositif de traitement d'informations identifié (10a),
le premier dispositif de communication (20a) est configuré pour recevoir (604) le deuxième paquet,
le dispositif de commande (30a) est configuré pour appliquer (607, 608), sur la base de la réception du deuxième paquet, la première règle au premier dispositif de communication (20a),
après l'application de la première règle au premier dispositif de communication (20a), le premier dispositif de traitement d'informations (10a) est configuré pour transmettre (609) un troisième paquet qui appartient au premier flux,
le premier dispositif de communication (20a) est configuré pour recevoir (609) le troisième paquet, et
le premier dispositif de communication (20a) est configuré pour rejeter (610) le troisième paquet sur la base de la première règle.

10. Système de communication selon la revendication 9, dans lequel :
le dispositif de commande (30a) inclut un premier dispositif de commande et un second dispositif de commande,
le premier dispositif de commande est configuré pour commander le premier dispositif de communication (20a) et
le second dispositif de commande est configuré pour commander le second dispositif de communication (20b).

11. Système de communication selon la revendication 10, dans lequel :
le second dispositif de commande est configuré pour identifier, sur la base de premières informations d'en-tête du premier paquet rejeté, le premier dispositif de traitement d'informations (10a) qui est le noeud source de transmission du premier paquet,
le second dispositif de commande est configuré pour transmettre au réseau (1) le deuxième paquet dont le noeud de destination est le premier dispositif de traitement d'informations identifié (10a), et
le premier dispositif de commande est configuré pour appliquer, sur la base de la réception du deuxième paquet, la première règle au premier dispositif de communication (20a).

12. Système de communication selon la revendication 11, dans lequel :
le second dispositif de communication (20b) est configuré pour notifier au second dispositif de commande les premières informations d'en-tête après que le second dispositif de communication (20b) rejette le premier paquet.

13. Système de communication selon la revendication 12, dans lequel :
le premier dispositif de commande est configuré pour transmettre au second dispositif de commande un quatrième paquet incluant des premières informations identifiant que le premier dispositif de traitement d'informations (10a) est un noeud de destination du deuxième paquet, sur la base de secondes informations d'en-tête du deuxième paquet, et
le second dispositif de commande est configuré pour transmettre au premier dispositif de commande, sur la base des premières informations, un cinquième paquet demandant au premier dispositif de communication (20a) d'appliquer la première règle.

14. Système de communication selon la revendication 11, dans lequel :
la première règle stipule qu'un paquet ayant les mêmes informations d'en-tête que les premières informations d'en-tête doit être rejeté.

15. Système de communication selon la revendication 12, dans lequel :
le premier dispositif de communication (20a) et le second dispositif de commande partagent une seconde règle stipulant que le deuxième paquet doit être rejeté, et
le second dispositif de commande est configuré pour générer le deuxième paquet selon la seconde règle et le premier dispositif de communication (20a) est configuré pour rejeter le deuxième paquet sur la base de la seconde règle.
